# EUROPEAN PATENT SPECIFICATION

(11) **EP 4 299 671 B1**
(45) Date of publication and mention of the grant of the patent: **19.11.2025**
(21) Application number: 22924395.1
(22) Date of filing: 29.12.2022
(51) Int. Cl.: C08L 67/02, C08L 77/00, C08L 25/12, C08L 51/06, C08K 7/14, C03C 13/00

(54) **THERMOPLASTIC RESIN COMPOSITION AND MOLDED ARTICLE**
THERMOPLASTISCHE HARZZUSAMMENSETZUNG UND FORMARTIKEL
COMPOSITION DE RÉSINE THERMOPLASTIQUE ET ARTICLE MOULÉ

(30) Priority: 27.01.2022 KR 20220011939; 26.12.2022 KR 20220184385
(43) Date of publication of application: 03.01.2024
(73) Proprietor: LG Chem, Ltd., Seoul 07336 (KR)
(72) Inventor: KO, Gun, Daejeon 34122 (KR); KONG, Seonho, Daejeon 34122 (KR); SON, Sun Mo, Daejeon 34122 (KR)
(74) Representative: Goddar, Heinz J.
(86) International application number: PCT/KR2022/021635
(87) International publication number: WO 2023/146143

(56) References cited:
- CN-A- 113 214 613
- CN-A- 113 214 613
- JP-A- 2019 073 735
- JP-A- 2019 073 735
- KR-A- 20050 009 004
- KR-A- 20050 009 004
- KR-A- 20130 078 602
- KR-A- 20130 078 602
- KR-A- 20180 078 894
- US-B2- 10 501 622

## Description

### [Technical Field]

The present invention relates to a thermoplastic resin composition and a molded article manufactured using the same. More particularly, the present invention relates to a thermoplastic resin composition having tensile strength, elongation, and flexural strength equal or superior to those of a conventional composite material composed of a polyester resin and a reinforcing resin; having greatly improved impact strength, flexural modulus, and heat deflection temperature under high load; and thus being suitable for lightweight automotive parts requiring high heat resistance and high rigidity, and a molded article manufactured using the thermoplastic resin composition.

### [Background Art]

Research is being actively conducted to use a composite material prepared by alloying a polyester resin and a reinforcing resin for reinforcing rigidity such as impact strength as a material for automotive parts.

Examples of the reinforcing resin include an acrylate-styrene-acrylonitrile graft copolymer, a styrene-acrylonitrile copolymer, and polyethylene terephthalate, which have excellent mechanical strength, moldability, and long-term properties.

On the other hand, technologies for obtaining a polyester resin by recycling waste fishing nets are being developed. For example, in the case of tuna fishing, extra-large fishing nets are used to catch skipjack and yellowfin tuna, and the amount of waste fishing nets thrown into the sea every year is estimated to be about 640,000 tons.

An extra-large fishing net for tuna fishing has a length of 2 km and a width of 80 m, weighs about 60 tons, and is usually made of nylon and polyethylene terephthalate.

Therefore, when the above-mentioned composite material is prepared using large waste fishing nets and high heat resistance, high rigidity, and weight reduction are realized, an eco-friendly composite material capable of preventing environmental pollution may be provided.

### [Related Art Documents]

### [Patent Documents]

KR 2019-0027115 A

JP 2019073735 A discloses a method for producing a thermoplastic resin composition comprising blending into a thermoplastic resin (I), a masterbatch comprising an antimony compound contained in 70 to 90 mass% and a thermoplastic resin (II) of the same kind as or different kind from the thermoplastic resin (I), a boron-based flame retardant and a glass fiber and melt needing by supplying the masterbatch from a dedicated feeder provided separately from other raw materials in an extruder and supplying the glass fiber from a side feeder.

### [Disclosure]

### [Technical Problem]

Therefore, the present invention has been made in view of the above problems, and it is one object of the present invention to provide a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high heat resistance and high rigidity, and a molded article manufactured using the thermoplastic resin composition.

The above and other objects can be accomplished by the present invention described below.

### [Technical Solution]

In accordance with one aspect of the present invention, provided is a thermoplastic resin composition, including:
a polyester resin, a reinforcing resin, a filling fiber, and a recycled molded article,
wherein, when a weight of the polyester resin is a, a weight of the reinforcing resin is b, a weight of the filling fiber is c, and a weight of the recycled molded article is d, 37≤a≤59.2, 15≤b≤19.9, 20≤c 34.9, and 5≤d≤14.9 are simultaneously satisfied, and
the recycled molded article is a product obtained by processing waste fishing nets.

The polyester resin may be polybutylene terephthalate having an intrinsic viscosity (IV) of less than 1.0 dl/g.

The reinforcing resin may include a styrene-acrylonitrile copolymer and an acrylate-styrene-acrylonitrile graft copolymer in a weight ratio of 1:0.5 to 5.

The styrene-acrylonitrile copolymer may include 66 to 76 % by weight of an aromatic vinyl compound and 26 to 34 % by weight of a vinyl cyanide compound.

The acrylate-styrene-acrylonitrile graft copolymer may include 40 to 47 % by weight of acrylic rubber, 30 to 37 % by weight of an aromatic vinyl compound, and 23 to 28 % by weight of a vinyl cyanide compound.

The filling fiber may be glass fiber including 45 to 55 % by weight of silica, 15 to 32 % by weight of alumina, and 15 to 32 % by weight of calcium oxide.

The product obtained by processing waste fishing nets may be a product obtained by desalting and chip-molding waste fishing net pellets containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment.

The product obtained by processing waste fishing nets may be a product obtained by pre-cutting waste fishing nets made of polyethylene terephthalate having an intrinsic viscosity (IV) of 0.6 to 0.9 dl/g, removing sand and salt therefrom, and cutting, desalting, and extruding the waste fishing nets.

The thermoplastic resin composition may include one or more additives selected from an antioxidant, a lubricant, a hydrolysis suppressor, a flame retardant, a nucleating agent, a heat stabilizer, a light stabilizer, and a thickener.

The thermoplastic resin composition may have a flexural modulus of 8,000 MPa or more as measured at a rate of 2 mm/min and a span of 64 according to standard measurement ISO 178.

The thermoplastic resin composition may have a room-temperature impact strength of 7.0 kJ/m² or more as measured according to standard measurement ISO 180/1A.

The thermoplastic resin composition may have a heat deflection temperature of 180 °C or higher as measured under 1.80 MPa according to standard measurement ISO 75.

In accordance with another aspect of the present invention, provided is a method of preparing a thermoplastic resin composition, including:
desalting waste polyester fishing nets having an intrinsic viscosity (IV) of 0.6 to 0.9 dl/g to obtain waste fishing net pellets and chip-molding the waste fishing net pellets to manufacture a recycled molded article containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment; and
melt-kneading and extruding the recycled molded article, a polyester resin having an intrinsic viscosity (IV) of less than 1.0 dl/g, a reinforcing resin, and a filling fiber,
wherein, when a weight of the polyester resin is a, a weight of the reinforcing resin is b, a weight of the filling fiber is c, and a weight of the recycled molded article is d, 37≤a≤59.2, 15≤b≤19.9, 20≤c ≤34.9, and 5≤d≤14.9 are simultaneously satisfied.

In accordance with yet another aspect of the present invention, provided is a molded article,
manufactured using the above-described thermoplastic resin composition.

The molded article may be an automotive part, and may include an LAMP bracket or an ECU Powerpack bracket.

### [Advantageous Effects]

According to the present invention, the present invention has an effect of providing a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high heat resistance and high rigidity, and a molded article manufactured using the thermoplastic resin composition.

Therefore, the thermoplastic resin composition according to the present invention can be used to manufacture automotive parts. Specifically, the thermoplastic resin composition according to the present invention can be used to manufacture lightweight automotive parts, such as an LAMP bracket and an ECU Powerpack bracket, that require high heat resistance and high rigidity.

### [Description of Drawings]

FIG. 1 is a flowchart showing a process of processing waste fishing nets to obtain a waste fishing net product, which is used in an embodiment to be described later.
FIG. 2 includes an image (A) of a fishing net (before use), an image (B) of a waste fishing net (after use), and an image (C) of a waste fishing net product obtained according to the process of FIG. 1.

### [Best Mode]

Hereinafter, the present invention will be described in more detail to aid in understanding of the present invention.

In this description, a polymer including a certain compound means a polymer prepared by polymerizing the compound, and a unit in the polymer is derived from the compound.

The present inventors confirmed that, when a polyester composite material composed of a polyester resin and a reinforcing resin, a filling fiber, and a recycled molded article obtained by desalting waste fishing nets were included, a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high heat resistance and high rigidity was prepared. Based on these results, the present inventors conducted further studies to complete the present invention.

In the present disclosure, the composition ratio of a (co)polymer may mean the content of units constituting the (co)polymer, or may mean the content of units input during polymerization of the (co)polymer.

In the present disclosure, "content" means weight unless otherwise defined.

The thermoplastic resin composition of the present invention includes a polyester resin, a reinforcing resin, a filling fiber, and a recycled molded article, wherein, when the weight of the polyester resin is a, the weight of the reinforcing resin is b, the weight of the filling fiber is c, and the weight of the recycled molded article is d, 37≤a≤59.2, 15≤b≤19.9, 20≤c ≤34.9, and 5≤d≤14.9 are simultaneously satisfied, and the recycled molded article is a product obtained by processing waste fishing nets. In this case, the present invention has an effect of providing a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high heat resistance and high rigidity.

In addition, the thermoplastic resin composition of the present invention includes a polyester resin, a reinforcing resin, a filling fiber, and a recycled molded article, wherein, when the weight of the polyester resin is a, the weight of the reinforcing resin is b, the weight of the filling fiber is c, and the weight of the recycled molded article is d, 37≤a≤59.2, 15≤b≤19.9, 20≤c ≤34.9, and 5≤d≤14.9 are simultaneously satisfied, and the recycled molded article is a product obtained by desalting and chip-molding waste fishing net pellets containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment. In this case, the present invention has an effect of providing a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high heat resistance and high rigidity.

In addition, the thermoplastic resin composition of the present invention includes a polyester resin, a reinforcing resin, a filling fiber, and a recycled molded article, wherein, when the weight of the polyester resin is a, the weight of the reinforcing resin is b, the weight of the filling fiber is c, and the weight of the recycled molded article is d, 37≤a≤59.2, 15≤b≤19.9, 20≤c≤34.9, and 5≤d≤14.9 are simultaneously satisfied, and the recycled molded article is a product obtained by pre-cutting waste fishing nets made of polyethylene terephthalate having an intrinsic viscosity (IV) of 0.6 to 0.9 dl/g, removing sand and salt therefrom, and cutting, desalting, and extruding the waste fishing nets. In this case, the present invention has an effect of providing a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high heat resistance and high rigidity.

Hereinafter, each of the components constituting the thermoplastic resin composition of the present invention is described in detail as follows.

### Polyester resin

In one embodiment of the present invention, the polyester resin includes a polyalkylene terephthalate. Considering physical properties and cost, polybutylene terephthalate may be preferably used as the polyester resin.

The polybutylene terephthalate may be obtained by direct esterification of 1,4-butanediol and terephthalic acid or dimethyl terephthalate or by condensation polymerization after transesterification of 1,4-butanediol and terephthalic acid or dimethyl terephthalate.

The polyester resin has an intrinsic viscosity (IV) of preferably 0.6 to 0.9 dl/g, more preferably 0.7 to 0.9 dl/g as measured according to ASTM D2857. When the intrinsic viscosity of the polyester resin, particularly polybutylene terephthalate, is within this range, a thermoplastic resin composition having excellent balance between mechanical properties and moldability may be obtained.

In the present disclosure, when intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

### Reinforcing resin

The thermoplastic resin composition of the present invention may include an acrylate-styrene-acrylonitrile graft copolymer including acrylic rubber, an aromatic vinyl compound, and a vinyl cyanide compound and a styrene-acrylonitrile copolymer including an aromatic vinyl compound and an acrylonitrile monomer as the reinforcing resin

### Acrylate-styrene-acrylonitrile graft copolymer

In one embodiment of the present invention, the acrylate-styrene-acrylonitrile graft copolymer may be prepared by graft-polymerizing acrylic rubber, an aromatic vinyl compound, and an acrylonitrile monomer. For example, the acrylate-styrene-acrylonitrile graft copolymer may be a graft copolymer containing acrylic rubber having an average particle diameter of 50 to 500 nm. In this case, mechanical properties, such as impact strength and tensile strength, heat resistance, colorability, and weather resistance may be excellent.

For example, the acrylic rubber contained in the graft copolymer may have an average particle diameter of 50 to 500 nm, preferably 70 to 450 nm, more preferably 100 to 350 nm. Within this range, mechanical properties and heat resistance may be excellent. When the average particle diameter of the acrylic rubber is less than the range, mechanical properties such as impact strength and tensile strength may be deteriorated. When the average particle diameter of the acrylic rubber exceeds the range, thermal stability may be reduced.

In the present disclosure, average particle diameter may be measured by dynamic light scattering. Specifically, the average particle diameter of a specimen in latex form may be measured in a Gaussian mode using a particle size distribution analyzer (Nicomp 380). In addition, the average particle diameter may be an arithmetic average particle diameter in a particle diameter distribution measured by dynamic light scattering, specifically, a scattering intensity average particle diameter.

As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 µsec.

For example, based on a total weight of the rubber polymers and the monomers constituting the graft copolymer, the content of the acrylic rubber included in the graft copolymer may be 40 to 47 % by weight, preferably 40 to 45 % by weight, more preferably 40 to 43 % by weight. Within this range, weather resistance, impact strength, and scratch resistance may be excellent.

For example, the acrylic rubber may be prepared by emulsion polymerization of a (meth)acrylate-based monomer. As a specific example, the acrylic rubber may be prepared by mixing a (meth)acrylate-based monomer, an emulsifier, an initiator, a grafting agent, a crosslinking agent, an electrolyte, and water and emulsion-polymerizing the mixture. In this case, grafting efficiency may be increased, and thus physical properties such as impact resistance may be excellent.

For example, the (meth)acrylate-based monomer may include one or more selected from alkyl (meth)acrylates having 2 to 8 carbon atoms, preferably an alkyl acrylate containing an alkyl group having 4 to 8 carbon atoms, more preferably butyl acrylate or ethylhexyl acrylate.

In the present disclosure, the (meth)acrylate-based monomer includes both an acrylate-based monomer and a methacrylate-based monomer.

The emulsion polymerization may be graft emulsion polymerization, and may be performed, for example, at 50 to 85 °C, preferably 60 to 80 °C.

The initiator is a radical initiator. As a specific example, the initiator may include one or more selected from inorganic peroxides including sodium persulfate, potassium persulfate, ammonium persulfate, potassium superphosphate, and hydrogen peroxide; organic peroxides including t-butyl peroxide, cumene hydroperoxide, p-menthane hydroperoxide, dit-butyl peroxide, t-butylcumyl peroxide, acetyl peroxide, isobutyl peroxide, octanoyl peroxide, dibenzoyl peroxide, 3,5,5-trimethylhexanol peroxide, and t-butylperoxy isobutyrate; and azo compounds including azobis isobutyronitrile, azobis-2,4-dimethylvaleronitrile, azobis(cyclohexanecarbonylnitrile), and azobis isobutyric acid methyl.

In addition to the initiator, an activator may be further added to promote initiation reaction.

For example, the activator may include one or more selected from sodium formaldehyde sulfoxylate, sodium ethylenediamine tetraacetate, ferrous sulfate, dextrose, sodium pyrophosphate, anhydrous sodium pyrophosphate, and sodium sulfate.

For example, based on 100 parts by weight in total of the rubber polymer and the monomer constituting the graft copolymer, the initiator may be added in an amount of 0.001 to 1 part by weight, preferably 0.01 to 0.5 parts by weight, more preferably 0.02 to 0.1 parts by weight. Within this range, emulsion polymerization may be facilitated, and the remaining amount of the initiator in the graft copolymer may be minimized to an amount of several tens of ppm.

The weight of the rubber is based on solids in the case of latex, or may be the weight of a monomer added when preparing rubber according to another method.

For example, the emulsifier may include one or more selected from a potassium compound of alkylbenzene sulfonate, a sodium compound of alkylbenzene sulfonate, a potassium compound of alkyl carboxylate, a sodium compound of alkyl carboxylate, a potassium compound of oleic acid, a sodium compound of oleic acid, a potassium compound of alkyl sulfate, a sodium compound of alkyl sulfate, a potassium compound of alkyl dicarboxylate, a sodium compound of alkyl dicarboxylate, a potassium compound of alkyl ether sulfonate, a sodium compound of alkyl ether sulfonate, and an ammonium compound of allyloxynonylphenoxypropane-2-yloxy methylsulfonate, preferably sodium dodecylbenzenesulfonate.

A commercially available emulsifier may be used as the emulsifier. In this case, one or more selected from SE10N, BC-10, BC-20, HS10, Hitenol KH10, and PD-104 may be used.

For example, based on 100 parts by weight in total of the rubber polymer and the monomer constituting the graft copolymer, the emulsifier may be added in an amount of 0.15 to 2.0 parts by weight, preferably 0.3 to 1.5 parts by weight, more preferably 0.5 to 1.2 parts by weight. Within this range emulsion polymerization may be facilitated, and the remaining amount of the initiator in the graft copolymer may be minimized to an amount of several tens of ppm.

When emulsion polymerization is performed, a molecular weight modifier may be further added. For example, the molecular weight modifier may include one or more selected from t-dodecyl mercaptan, n-dodecyl mercaptan, and an alphamethyl styrene dimer, preferably t-dodecyl mercaptan.

For example, based on 100 parts by weight in total of the rubber polymer and the monomer constituting the graft copolymer, the molecular weight modifier may be added in an amount of 0.1 to 1 part by weight, preferably 0.2 to 0.8 parts by weight, more preferably 0.4 to 0.6 parts by weight.

The emulsion polymerization may be initiated after monomers are fed into a reactor batchwise. Alternatively, some of monomers may be fed into a reactor before start of emulsion polymerization, and the remainder may be fed into the reactor after start of emulsion polymerization batchwise, or emulsion polymerization may be performed while continuously feeding monomers or feeding the monomers stepwise for a certain period of time.

The obtained graft copolymer may be in the form of latex, and may be recovered in a dried powder form through aggregation, dehydration, and drying processes.

As a coagulant used for aggregation, salts such as calcium chloride, magnesium sulfate, and aluminum sulfate, acidic substances such as sulfuric acid, nitric acid, and hydrochloric acid, and mixtures thereof may be used.

For example, based on a total weight of the rubber polymers and the monomers constituting the graft copolymer, the content of the aromatic vinyl compound included in the graft copolymer may be 30 to 37 % by weight, preferably 33 to 37 % by weight. Within this range, mechanical properties, such as tensile strength and impact strength, and processability may be excellent.

For example, the aromatic vinyl compound may include one or more selected from the group consisting of styrene, α-methyl styrene, o-methyl styrene, p-methyl styrene, m-methyl styrene, ethyl styrene, isobutyl styrene, t-butyl styrene, o-bromostyrene, p-chlorostyrene, m-bromostyrene, o-chlorostyrene, p-chlorostyrene, m-chlorostyrene, vinyltoluene, vinylxylene, fluorostyrene, and vinylnaphthalene. In this case, processability may be excellent due to proper fluidity, and mechanical properties such as tensile strength and impact strength may be excellent.

The vinyl cyanide compound included in the graft copolymer may include one or more selected from acrylonitrile, methacrylonitrile, ethacrylate, phenyl acrylonitrile, α-chloroacrylonitrile, and ethacrylonitrile, preferably acrylonitrile.

For example, based on a total weight of the rubber polymers and the monomers constituting the graft copolymer, the content of the vinyl cyanide compound included in the graft copolymer may be 23 to 28 % by weight, preferably 23 to 26 % by weight, more preferably 24 to 26 % by weight. Within this range, impact resistance and processability may be excellent.

In the present disclosure, the term "total weight of a copolymer" may mean the actual total weight of the obtained copolymer or may mean the total weight of rubber and/or monomers added instead of the copolymer.

A commercially available product may be used as long as the product meets the definition of the graft copolymer of the present invention.

For example, the graft copolymer may have a weight average molecular weight of 40,000 to 200,000 g/mol, preferably 60,000 to 190,000 g/mol, more preferably 80,000 to 190,000 g/mol. Within this range, processability may be excellent due to proper fluidity, and mechanical properties such as tensile strength and impact strength may be excellent.

In the present disclosure, weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. Specifically, the weight average molecular weight is a weight average molecular weight (Mw) converted based on polystyrene by gel permeation chromatography (GPC, PL GPC220, Agilent Technologies).

Specifically, a polymer to be measured is dissolved in tetrahydrofuran to a concentration of 1 %, and 10 µl of the dissolved sample is injected into a gel permeation chromatograph (GPC) at a flow rate of 0.3 mL/min. At this time, analysis is performed at a sample concentration of 2.0 mg/mL (100 µl injection) at 30 °C. In this case, two columns (PLmixed B, Waters Co.) are connected in series, and an RI detector (2414, Agilent Waters Co.) is used. At this time, measurement is performed at 40 °C, and data is processed using ChemStation.

### Styrene-acrylonitrile copolymer

In the present disclosure, the styrene-acrylonitrile copolymer constituting the reinforcing resin includes an aromatic vinyl compound and a vinyl cyanide compound.

The styrene-acrylonitrile copolymer may improve the physical property balance of the thermoplastic resin compositions. That is, the styrene-acrylonitrile copolymer may act as a base resin to control surface impact, mechanical properties, processability, coating appearance, and prevention of cracking after coating.

The styrene-acrylonitrile copolymer may be prepared by copolymerizing an aromatic vinyl compound and a vinyl cyanide compound.

Specifically, the styrene-acrylonitrile copolymer may be prepared by adding an aromatic vinyl compound and a vinyl cyanide compound batchwise or continuously and polymerizing these compounds using one or more methods selected from emulsion polymerization, suspension polymerization, and bulk polymerization.

Types of the aromatic vinyl compound and the vinyl cyanide compound are as described in the acrylate-styrene-acrylonitrile graft copolymer.

For example, based on 100 % by weight in total of the monomers constituting the copolymer, the styrene-acrylonitrile copolymer may include 66 to 76 % by weight, preferably 68 to 74 % by weight, more preferably 70 to 74 % by weight of the aromatic vinyl compound. Within this range, the physical property balance and surface gloss of a molded article manufactured using the thermoplastic resin composition of the present invention may be further improved.

For example, based on 100 % by weight in total of the monomers constituting the copolymer, the styrene-acrylonitrile copolymer may include 26 to 34 % by weight, preferably 26 to 32 % by weight, more preferably 26 to 30 % by weight of the vinyl cyanide compound. Within this range, the physical property balance and surface gloss of a molded article manufactured using the thermoplastic resin composition of the present invention may be further improved.

For example, the styrene-acrylonitrile copolymer may have a weight average molecular weight of 40,000 to 200,000 g/mol, preferably 60,000 to 190,000 g/mol, more preferably 80,000 to 190,000 g/mol. Within this range, the physical property balance between mechanical properties, processability, and coating appearance may be easily controlled.

A commercially available product may be used as long as the product meets the definition of the styrene-acrylonitrile copolymer of the present invention.

The styrene-acrylonitrile copolymer may preferably include two or more copolymers containing different amounts of a vinyl cyanide-based monomer.

That is, the styrene-acrylonitrile copolymer may include a first copolymer containing a first content of a vinyl cyanide compound and a second copolymer containing a second content of the vinyl cyanide compound. In this case, the second content is greater than the first content.

For example, the first copolymer may include 21 to 31 % by weight (corresponding to the first content) of the vinyl cyanide compound, and the second copolymer may include greater than 31 % by weight and 35 % by weight or less (corresponding to the second content) of the vinyl cyanide compound. Within this range, the mechanical properties and processability of a molded article manufactured by injecting the thermoplastic resin composition of the present invention may be further improved.

The styrene-acrylonitrile copolymer may be prepared by polymerizing the aromatic vinyl compound and the vinyl cyanide compound using one or more methods selected from bulk polymerization, emulsion polymerization, and suspension polymerization. When bulk polymerization is used, manufacturing cost may be reduced, and mechanical properties may be excellent.

When bulk polymerization is used, since additives such as emulsifiers and suspending agents are not added, a high-purity copolymer with a minimized amount of impurities may be prepared. Accordingly, to prepare a thermoplastic resin composition capable of maintaining transparency, it is advantageous to include a copolymer prepared by bulk polymerization.

For example, bulk polymerization may be performed by adding an organic solvent as a reaction medium and, when necessary, additives including a molecular weight modifier and a polymerization initiator to a monomer mixture and then polymerizing the mixture.

As a specific example, a method of preparing the styrene-acrylonitrile copolymer may include a step of mixing 100 parts by weight of a monomer mixture including an aromatic vinyl compound and a vinyl cyanide compound, 20 to 40 parts by weight of a reaction medium, and 0.05 to 0.5 parts by weight of a molecular weight modifier and polymerizing the reaction mixture at a reaction temperature of 130 to 170 °C for 2 to 4 hours.

Solvents commonly used in the art may be used as the reaction medium without particular limitation. For example, the reaction medium may be an aromatic hydrocarbon-based compound such as ethylbenzene, benzene, toluene, or xylene.

For example, the method of preparing the styrene-acrylonitrile copolymer may be performed using a continuous processing machine consisting of a raw material input pump, a continuous stirring tank into which reaction raw materials are continuously fed, a pre-heating tank for pre-heating a polymer solution discharged from the continuous stirring tank, a volatilization tank for volatilizing unreacted monomers and/or a reaction medium, a polymer transfer pump, and an extruder for preparing a polymer in the form of pellets.

For example, extrusion processing may be performed at 210 to 240 °C, but the present invention is not limited thereto.

A commercially available product may be used as long as the product meets the definition of the styrene-acrylonitrile copolymer of the present invention.

The reinforcing resin may include the styrene-acrylonitrile copolymer and the acrylate-styrene-acrylonitrile graft copolymer in a weight ratio of 1:0.5 to 5, 1:0.7 to 1.5, or 1:0.8 to 1.2. Within this range, a thermoplastic resin composition having excellent balance between chemical resistance, mechanical properties, and heat resistance may be obtained.

### Filling fiber

In the present invention, to increase the mechanical properties, heat resistance and dimensional stability of the thermoplastic resin composition, a filling fiber is included.

In one embodiment of the present invention, glass fiber including 45 to 55 % by weight of silica, 15 to 32 % by weight of alumina, and 15 to 32 % by weight of calcium oxide may be used as the filling fiber. When glass fiber satisfying the range is used, a thermoplastic resin composition having excellent balance between chemical resistance, mechanical properties, and heat resistance may be obtained.

In one embodiment of the present invention, the glass fiber includes preferably 50 to 55 % by weight of silica, 15 to 27 % by weight of alumina, and 15 to 25 % by weight of calcium oxide, more preferably 51 to 53 % by weight of silica, 17 to 19 % by weight of alumina, and 15 to 17 % by weight of calcium oxide. In this case, a thermoplastic resin composition having excellent physical property balance between processability, specific gravity, and mechanical properties may be obtained, and a molded article having high heat resistance, high rigidity, and high toughness may be manufactured using the thermoplastic resin composition.

The glass fiber of the present invention may have a circular cross-section or a flat cross-section. In this case, excellent rigidity and appearance may be secured, and weight reduction may be achieved.

For example, the glass fiber may have an aspect ratio of 1:1 to 1:4, as a specific example, 1:1 to 1:3, more specifically 1:1. Here, the aspect ratio is expressed as the ratio (L/D) of length (L) to diameter (D). Within this range, the thermoplastic resin composition of the present invention may have high rigidity and toughness, and the elongation and surface appearance thereof may be improved. As a specific example, the glass fiber may have an aspect ratio of 1:3 to 1:4, more specifically 1:4. Within this range, in addition to high rigidity and toughness, a product advantageous in terms of flatness, deformation, and orientation may be provided.

In the present disclosure, diameter and length may be measured using a scanning electron microscope (SEM). Specifically, 20 inorganic fillers are selected using a scanning electron microscope, the diameter and length of each inorganic filler are measured using an icon bar capable of measuring diameter, and then the average diameter and average length are calculated.

For example, the average diameter may be 10 to 13 µm, as a specific example, 10 to 11 µm, and the average length may be 2.5 to 6 mm, as a specific example, 3 to 4 mm. Within this range, processability may be improved, and thus the tensile strength of a molded article manufactured by molding the thermoplastic resin composition of the present invention may be improved.

The cross-section of the glass fiber may have a circular, rectangular, elliptical, dumbbell, or rhombic shape.

In one embodiment of the present invention, the glass fiber may be used in combination with other inorganic fibers and/or natural fibers, and the inorganic fibers may include carbon fiber, basalt fiber, and the natural fibers may include kenaf and hemp.

In one embodiment of the present invention, during fiber manufacturing or post-processing, the glass fiber may be treated with a sizing agent, such as a lubricant, a coupling agent, and a surfactant.

The lubricant is mainly used to form a good strand when manufacturing glass fiber, and the coupling agent plays a role in enabling good adhesion between glass fiber and a base resin. When the types of base resin and glass fiber are properly selected, excellent physical properties may be imparted to the thermoplastic resin composition.

The coupling agent may be applied directly to glass fiber or added to an organic matrix. To sufficiently exhibit the performance of the coupling agent, the content thereof may be appropriately selected.

Examples of the coupling agent include amine-based coupling agents, acrylic coupling agents, and silane-based coupling agents, preferably silane-based coupling agents.

As a specific example, the silane-based coupling agents may include γ-aminopropyl triethoxysilane, γ-aminopropyl trimethoxysilane, N-(beta-aminoethyl) γ-aminopropyl triethoxysilane, γ-methacryloxypropyl triethoxysilane, γ-glycidoxypropyl trimethoxysilane, and β-(3,4-epoxyethyl) γ-aminopropyl trimethoxysilane.

### Recycled molded article

In one embodiment of the present invention, the recycled molded article may include a product obtained by processing waste fishing nets.

The waste fishing nets may be a resin containing polyamide and polyethylene terephthalate, and may include a portion of polyamide and polyethylene terephthalate prepared by condensation polymerization of terephthalic acid and ethylene glycol, but the present invention is not limited thereto.

In this case, based on the polyethylene terephthalate, the polyamide may be included in an amount of 3 to 48 mol%, preferably 5 to 20 mol%. When the polyamide is included in an amount within this range, a thermoplastic resin composition having excellent balance between surface smoothness, heat resistance, and high rigidity may be obtained.

In one embodiment of the present invention, the polyamide-polyethylene terephthalate has an intrinsic viscosity (IV) of preferably 0.6 to 0.9 dl/g, more preferably 0.7 to 0.9 dl/g as measured according to ASTM D2857. Within the intrinsic viscosity of the polyamide-polyethylene terephthalate is within this range, a thermoplastic resin composition having excellent balance between mechanical properties, moldability, and high rigidity may be obtained.

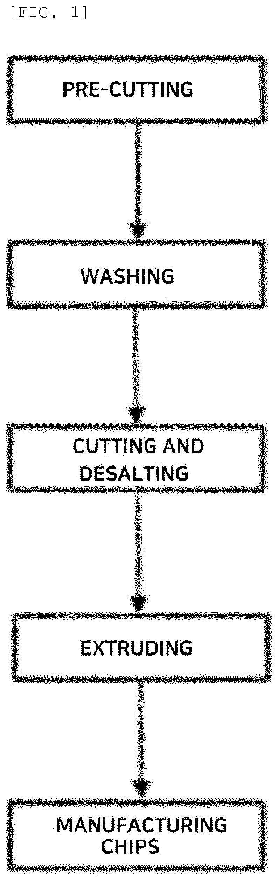

In one embodiment of the present invention, for example, the recycled molded article may be a black chip obtained by desalting a waste fishing net having a size of 2 km × 80 m according to a process flowchart of FIG. 1 to be described later. At this time, the size corresponds to the approximate size of a fishing net used in a tuna purse seiner.

FIG. 1 below is a process flowchart showing a process of manufacturing a recycled molded article used in an example to be described later.

According to FIG. 1 below, in step S1, waste fishing nets (polyamide: 80 % by weight and polyethylene terephthalate: 20 % by weight) having a size of 2 km × 80 m are pre-cut using a cutting machine. The cut size at the time of pre-cutting is not particularly limited. In addition, when used after cleaning about 200 kg of waste fishing nets, the washing and desalting processes described later may be easily performed.

Subsequently, in step S2, the pre-cut waste fishing nets are put into an industrial washing machine and washed for about 5 to 15 hours to primarily remove salt while removing sand.

In step S3, the washed waste fishing nets are put into a centrifugal separator equipped with blades, cut into sizes of 5 to 15 cm, and desalted.

Then, in step S4, extrusion is performed in a temperature range of 200 to 270 °C and pelletization is performed to manufacture chips.

Inorganic materials included in the obtained recycled molded article were analyzed using ICP-OES equipment, and the results are shown in Table 1 below.

**[Table 1]**

| Detected Ingredients | Chemical-based PET white chips (mg/kg) | Black chips obtained by desalting waste fishing nets (mg/kg) |
|---|---|---|
| Na | <10 | 80 |
| Mg | <10 | 80 |
| Al | <10 | 50 |
| Si | <10 | 50 |
| K | <10 | 30 |
| Ca | <10 | 420 |
| Ti | <10 | 30 |
| Fe | <10 | 560 |
| Ni | <10 | <10 |
| Zn | <10 | 120 |
| Sb | <10 | 100 |
| Cl | <10 | 100 |
| S | 10 | 750 |

As shown in Table 1, the product obtained by processing waste fishing nets may be an extrusion product by desalting and chip-molding waste fishing net pellets containing 60 to 99.9 % by weight, preferably 60 to 90 % by weight, more preferably 60 to 80 % by weight in total of Ca, Fe, and S and 0.1 to 40 % by weight, preferably 10 to 40 % by weight, more preferably 20 to 40 % by weight in total of Na, Mg, Al, Si, K, Ti, Ni, Zn, Sb, and Cl based on 100 % by weight in total of inorganic components as measured using ICP-OES equipment. Within the above-described range, a thermoplastic resin composition having excellent balance between mechanical properties and moldability may be obtained.

### Thermoplastic resin composition

In one embodiment of the present invention, the thermoplastic resin composition includes the polyester resin, the reinforcing resin, the filling fiber, and the recycled molded article described above. When the weight of the polyester resin is a, the weight of the reinforcing resin is b, the weight of the filling fiber is c, and the weight of the recycled molded article is d, preferably, 37≤a≤59.2, 15≤b≤19.9, 20≤c ≤34.9, and 5≤d≤14.9 are simultaneously satisfied. When the polyester resin, the reinforcing resin, the filling fiber, and the recycled molded article are included within the above-described content ranges, a thermoplastic resin composition having excellent balance between heat resistance and mechanical properties may be obtained.

In addition, when the weight of the polyester resin is a, the weight of the reinforcing resin is b, the weight of the filling fiber is c, and the weight of the recycled molded article is d, preferably, 37≤a≤50, 15≤b≤18, 27≤c≤33, and 7≤d≤14 are simultaneously satisfied. When the polyester resin, the reinforcing resin, the filling fiber, and the recycled molded article are included within the above-described content ranges, mechanical properties, such as impact strength and tensile strength, heat resistance, scratch resistance, and colorability may be excellent, and the physical property balance and surface gloss of a molded article may be further improved.

### Additives

In one embodiment of the present invention, the thermoplastic resin composition may include one or more additives selected from an antioxidant, a lubricant, a hydrolysis suppressor, a flame retardant, a nucleating agent, a heat stabilizer, a light stabilizer, and a thickener.

For example, the antioxidant may include a phenol-based antioxidant, a phosphorus-based antioxidant, or both. In this case, oxidation by heat may be prevented during an extrusion process, and mechanical properties may be excellent.

The lubricant according to the present invention may be lignite-derived mineral wax or olefin-based wax. In this case, the releasability and injection properties of the thermoplastic resin composition may be maintained at an excellent level.

The olefin-based wax may be a polymer having a low melt viscosity and may be an oily solid having sliding properties and plasticity. For example, the olefin-based wax may include at least one selected from polyethylene wax and polypropylene wax, and commercially available olefin wax may be used.

The mineral wax has a high melting point, high hardness, and high thermal stability, and one or more selected from OP and E grade mineral wax may be used. In addition, a commercially available product may be used as long as the product meets the definition of the mineral wax of the present invention.

Various known hydrolysis suppressors may be used as the hydrolysis suppressor according to the present invention within the range that does not adversely affect the thermoplastic resin composition of the present invention. Representative commercially available hydrolysis suppressors include phosphate compounds such as sodium phosphate monobasic represented by Chemical Formula of NaH₂PO₄.

Various known nucleating agents may be used as the nucleating agent according to the present invention within the range that does not adversely affect the thermoplastic resin composition of the present invention. Representative commercially available nucleating agents include BRUGGOLEN_P22.

Various known flame retardants may be used as the flame retardant according to the present invention within the range that does not adversely affect the thermoplastic resin composition of the present invention. Representative commercially available flame retardants include Clariant _Exolit-OP-1230.

Various known thickeners may be used as the thickener according to the present invention within the range that does not adversely affect the thermoplastic resin composition of the present invention. Representative commercially available thickeners include Xibond250.

In one embodiment of the present invention, for example, based on 100 parts by weight of the base resin, the additives may be included in an amount of 0.01 to 5 parts by weight, 0.05 to 3 parts by weight, preferably 0.01 to 2 parts by weight. Within this range, excellent releasability and injection properties may be achieved.

In addition, processing aids, pigments, and colorants may be further included as needed.

In one embodiment of the present invention, the thermoplastic resin composition may have a flexural modulus of 8,000 MPa or more, as a specific example, 8,000 to 8,900 MPa, as measured at a span of 64 and a rate of 2 mm/min according to standard measurement ISO 178. Within this range, molding characteristics required for injection products with high rigidity may be secured.

For example, the thermoplastic resin composition according to the present invention may have a room-temperature impact strength of 7.0 kJ/m² or more, as a specific example, 7.0 to 9.0 kJ/m², as measured according to standard measurement ISO 180/1A. Within this range, impact strength and appearance required for injection products with high rigidity may be secured.

In one embodiment of the present invention, for example, the thermoplastic resin composition may have a heat deflection temperature of 180 °C or higher, as a specific example, 180 to 199 kJ/m², as measured under a high load of 1.80 MPa according to standard measurement ISO 75. Within this range, high load-heat resistance characteristics required for high rigidity may be secured.

The thermoplastic resin composition may have a room-temperature tensile strength of 123 MPa or more, as a specific example, 123 to 150 MPa, as measured at a rate of 50 mm/min according to standard measurement ISO 527. In this case, mechanical properties, particularly rigidity and processability, may be excellent.

The thermoplastic resin composition may have an elongation of 2.0 % or more, as a specific example, 2.0 to 2.8 %, as measured at a rate of 50 mm/min according to standard measurement ISO 527. In this case, molding characteristics required for injection products having high rigidity may be secured.

The thermoplastic resin composition may have a melt flow index (260 °C, 2.16 kg) of 12.0 g/10 min or more, as a specific example, 12.0 to 15.0 g/10 min, as measured according to standard measurement ISO 1133. In this case, processability may be excellent.

The thermoplastic resin composition may have a density of 1.44 g/cm³ or more, as a specific example, 1.44 to 1.48 g/cm³. In this case, processability may be excellent.

As a specific example, the thermoplastic resin composition includes the polyester resin, the reinforcing resin, the filling fiber, and the recycled molded article described above. When the weight of the polyester resin is a, the weight of the reinforcing resin is b, the weight of the filling fiber is c, and the weight of the recycled molded article is d, 40.2≤a≤43.2, 15≤b≤17, 27≤c≤32, and 6.5≤d≤10 are simultaneously satisfied. When the recycled molded article is a black chip obtained by desalting waste fishing nets having a size of 2 km × 80 m, and is a molded product obtained by desalting and chip-molding waste fishing net pellets containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment, a thermoplastic resin composition having tensile strength, elongation, and flexural strength equal or superior to those of a conventional polyester composite material; having greatly improved impact strength, flexural modulus, and heat deflection temperature under high load; and thus being suitable for lightweight automotive parts requiring high rigidity may be provided.

### Method of preparing thermoplastic resin composition

The thermoplastic resin composition according to the present invention may be prepared by a method known in the art. For example, the thermoplastic resin composition may be prepared in the form of pellets by a method of melt-extruding a mixture of components and additives using an extruder, and the pellets may be used to manufacture injection-molded articles and extrusion-molded articles.

The method of preparing the thermoplastic resin composition shares all the technical characteristics of the above-described thermoplastic resin composition. Accordingly, repeated description thereof will be omitted.

In one embodiment of the present invention, the pellets are extruded at a temperature of 200 to 270 °C or 230 to 260 °C. At this time, the temperature means cylinder temperature.

Extrusion kneaders commonly used in the art to which the present invention pertains may be used without particular limitation, and a twin-screw extrusion kneader is preferably used.

During injection, mold temperature is 90 to 150 °C, preferably 100 to 120 °C. When the mold temperature is less than 90 °C, appearance may be deteriorated, and the effect of increasing crystallinity and physical properties due to annealing may be insignificant. When the mold temperature exceeds 150 °C, pellets may stick to a mold, reducing releasability and increasing a cooling rate. In addition, productivity may be greatly reduced in terms of mass production.

For example, the injection process may be performed using an injection molding machine with hopper temperature and nozzle temperature set to 290 °C to 305 °C, respectively.

For example, the method of preparing the thermoplastic resin composition of the present invention includes a step of desalting waste fishing nets to obtain black polyamide-polyethylene terephthalate chips; and a step of melt-kneading and extruding a resin composition including a base resin including the polyamide-polyethylene terephthalate and the polybutylene terephthalate, a reinforcing resin, glass fiber, and additives.

As a specific example, the method of preparing the thermoplastic resin composition may include a step of desalting waste polyester fishing nets having an intrinsic viscosity (IV) of 0.6 to 0.9 dl/g to obtain waste fishing net pellets and chip-molding the waste fishing net pellets to manufacture a recycled molded article containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment; and a step of melt-kneading and extruding the recycled molded article, a polyester resin having an intrinsic viscosity (IV) of less than 1.0 dl/g, a reinforcing resin, and a filling fiber.

When the weight of the polyester resin is a, the weight of the reinforcing resin is b, the weight of the filling fiber is c, and the weight of the recycled molded article is d, 37≤a≤59.2, 15≤b≤19.9, 20≤c≤34.9, and 5≤d≤14.9 may be simultaneously satisfied.

As the filling fiber, glass fiber including 45 to 55 % by weight of silica, 15 to 32 % by weight of alumina, and 15 to 32 % by weight of calcium oxide may be used.

### Molded article

The thermoplastic resin composition of the present invention may be used as a material for molded articles requiring excellent moldability and heat resistance and high rigidity and toughness.

The thermoplastic resin composition of the present invention may be used to manufacture lightweight parts requiring high rigidity and toughness. For example, in addition to automotive parts, the thermoplastic resin composition may be used to manufacture electrical/electronic parts, parts for office equipment.

According to another embodiment of the present invention, a molded article manufactured using the above-described thermoplastic resin composition is provided.

For example, the molded article may be a lightweight automotive part having high heat resistance and rigidity.

As another example, the molded article may be a lightweight automotive part having high heat resistance and rigidity, such as an LAMP bracket or an ECU Powerpack bracket.

In describing the thermoplastic resin composition and the molded article, it should be noted that other conditions or equipment not explicitly described herein may be appropriately selected within the range commonly practiced in the art without particular limitation.

Hereinafter, embodiments of the present invention are described in detail so as for those of ordinary skill in the art to easily implement the present invention. However, the present invention may be implemented in various different forms and is not limited to these embodiments. Here, % means % by weight unless otherwise defined.

### [Examples]

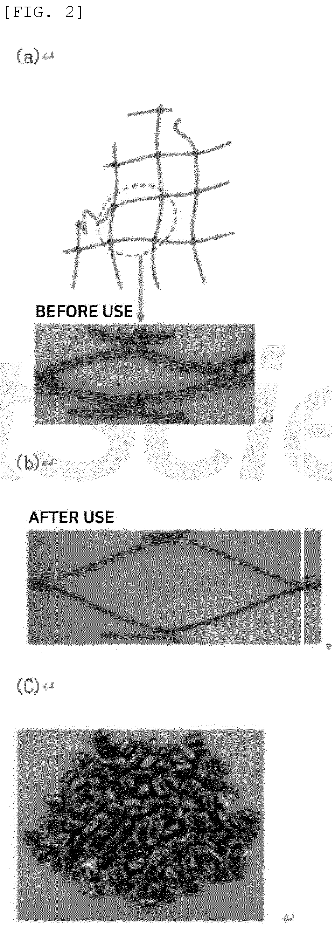

Polybutylene terephthalate, polyethylene terephthalate, recycled molded articles, reinforcing resins, filling fibers, antioxidants, nucleating agents, and hydrolysis suppressors used in Examples of the present invention and Comparative Examples are as follows.
(A-1) Polybutylene terephthalate (Intrinsic viscosity (IV): 0.8 dl/g)
(A-2) Polybutylene terephthalate (Intrinsic viscosity (IV): 1.0 dl/g)
(B) Recycled molded article: Black chips of FIG. 2C obtained by processing waste fishing nets according to the process flowchart of FIG. 1; Intrinsic viscosity: 0.8 dl/g
(C) Polyethylene terephthalate: Polyethylene terephthalate homopolymer having an intrinsic viscosity of 0.8 dl/g
(D) Reinforcing resin
(D-1a) Acrylate-styrene-acrylonitrile graft copolymer: Graft copolymer obtained by graft-polymerizing 41 % by weight of butyl acrylate rubber, 34 % by weight of styrene, and 25 % by weight of acrylonitrile
(D-1b) Acrylate-styrene-acrylonitrile graft copolymer: Graft copolymer obtained by graft-polymerizing 45 % by weight of butyl acrylate rubber, 35 % by weight of styrene, and 20 % by weight of acrylonitrile
(D-2a) Styrene-acrylonitrile copolymer: Copolymer (Weight average molecular weight: 130,000 g/mol) obtained by polymerizing 72 % by weight of styrene and 28 % by weight of acrylonitrile
(D-2b) Styrene-acrylonitrile copolymer: Copolymer (Weight average molecular weight: 120,000 g/mol) obtained by polymerizing 76 % by weight of styrene and 24 % by weight of acrylonitrile
(E) Filling fiber
(E-1) Glass fiber: Glass fiber (Average length: 3 mm, average particle diameter: 14 µm) including 48 % by weight of silica, 12 % by weight of alumina, 35 % by weight of calcium oxide, and 5 % by weight of other components including magnesia
(E-2) Glass fiber: Glass fiber (Average length: 3 mm, average particle diameter: 10 µm) including 44 % by weight of silica, 14 % by weight of alumina, 36 % by weight of calcium oxide, and 6 % by weight of other components
(E-3) Glass fiber: Glass fiber (Average length: 3 mm, average particle diameter: 10 µm) including 52 % by weight of silica, 18 % by weight of alumina, 16 % by weight of calcium oxide, and 14 % by weight of other components including MgO

### (Additives)

- Antioxidant: Pentaerythritol tetrakis(3-(3,5-di-tert-butyl-4-hydroxyphenyl)propionate)
- Nucleating agent: Polyethylene wax (LDPE wax)
- Hydrolysis suppressor: Sodium phosphate monobasic represented by Chemical Formula of NaH₂PO₄

### Examples 1 to 3 and Comparative Examples 1 to 11

Each component was added according to the contents described in Tables 2 and 3 below and melt-kneaded using a twin-screw extruder heated to 230 to 260 °C to prepare a resin composition in pellet form. For reference, the antioxidant was added in an amount of 0.4 % by weight, the nucleating agent was added in an amount of 0.3 % by weight, and the hydrolysis suppressor was added in an amount of 0.1 % by weight.

In Tables 2 and 3, the weight of the polyester resin is denoted by a, the weight of the reinforcing resin is denoted by b, the weight of the filling fiber is denoted by c, and the weight of the recycled molded article is denoted by d. Here, b corresponds to the total amount of D-1a and D-2a in the reinforcing resin.

After drying the obtained pellets at 120 °C for more than 4 hours, the dried pellets were injected at a mold temperature of 120 °C, a hopper temperature of 250 °C, and a nozzle temperature of 260 °C using a screw-type injection machine to obtain a specimen for evaluating mechanical properties. For the prepared specimen having a thickness of 4 mm, a width of 10 mm, and a marked line section (elongation measurement) of 50 mm, the physical properties thereof were measured in the following manners, and the results are shown in Tables 4 and 5 below.
*Melt flow index (g/10 min): Melt flow index was measured at 260 °C under a load of 2.16 kg according to ISO 1133.
*Impact strength (KJ/m²): Impact strength was measured according to ISO 180/1A (Notched, room temperature of 23 °C).
*Tensile strength (MPa) and elongation (%): Tensile strength and elongation were measured at a room temperature of 23 °C and a rate of 50 mm/min according to ISO 527.
*Flexural strength (MPa) and flexural modulus (MPa): Flexural strength and flexural modulus were measured at a span of 64 and a rate of 2 mm/min according to ISO 178.
*Heat deflection temperature (°C): Heat deflection temperature was measured under a high load of 1.80 MPa according to ISO 75.
*Density (g/cm³): Density was measured according to ISO 1183.

**[Table 2]**

| Classification | Example 1 | Example 2 | Example 3 |
|---|---|---|---|
| A-1 | 43.2 | 40.2 | 40.2 |
| A-2 | - | - | - |
| B | 10.0 | 13.0 | 6.5 |
| C | - | - | 6.5 |
| D-1a | 8.0 | 8.0 | 8.0 |
| D-1b | - | - | - |
| D-2a | 8.0 | 8.0 | 8.0 |
| D-2b | - | - | - |
| E-1 | - | - | - |
| E-2 | - | - | - |
| E-3 | 30.0 | 30.0 | 30.0 |

**[Table 3]**

| Clas sifi cati on | Com par ati ve Exa mpl e 1 | Com par ati ve Exa mpl e 2 | Com par ati ve Exa mpl e 3 | Com par ati ve Exa mpl e 4 | Com par ati ve Exa mpl e 5 | Com par ati ve Exa mpl e 6 | Com par ati ve Exa mpl e 7 | Com par ati ve Exa mpl e 8 | Com par ati ve Exa mpl e 9 | Com par ati ve Exa mpl e 10 | Com par ati ve Exa mpl e 11 |
|---|---|---|---|---|---|---|---|---|---|---|---|
| A- | 36. 2 | 40. 2 | 40. 2 | - | 40. 2 | 40. 2 | 48. 2 | 48. 2 | 38. 2 | 49. 2 | 40. 2 |
| A-2 | - | - | - | 40. 2 | - | - | - | - | - | - | - |
| B | 17. 0 | 13. 0 | 13. 0 | 13. 0 | 13. 0 | 13. 0 | 13. 0 | 13. 0 | 13. 0 | 2.0 | - |
| C | - | - | - | - | - | - | - | - | - | - | 13. 0 |
| D-1a | 8.0 | 8.0 | 8.0 | 8.0 | - | 8.0 | - | 8.0 | 10 | 10 | 8.0 |
| D-1b | - | - | - | - | 8.0 | - | - | - | - | - | - |
| D-2 | 8.0 | 8.0 | 8.0 | 8.0 | 8.0 | - | 8.0 | - | 8.0 | 8.0 | 8.0 |
| D-2b | - | - | - | - | - | 8.0 | - | - | - | - | - |
| E-1 | - | 30. 0 | - | - | - | - | - | - | - | - | - |
| E-2 | - | - | 30. 0 | - | - | - | - | - | - | - | - |
| E-3 | 30. 0 | - | - | 30. 0 | 30. 0 | 30. 0 | 30. 0 | 30. 0 | 30. 0 | 30. 0 | 30. 0 |

**[Table 4]**

| Classification | Unit | Example 1 | Example 2 | Example 3 |
|---|---|---|---|---|
| Melt flow index | g/10 min | 13.0 | 15.0 | 14.0 |
| Izod impact strength | kJ/m² | 8.5 | 8.5 | 8.5 |
| Tensile strength | MPa | 141 | 140 | 143 |
| Elongation | % | 2.3 | 2.0 | 2.0 |
| Flexural strength | MPa | 190 | 189 | 190 |
| Flexural modulus | MPa | 8610 | 8600 | 8400 |
| Heat deflection temperature | °C | 185 | 182 | 186 |
| Density | g/cm³ | 1.46 | 1.46 | 1.46 |

**[Table 5]**

| Clas sifi cati on | U n i t | Com par ati ve Exa mpl e 1 | Com par ati ve Exa mpl e 2 | Com par ati ve Exa mpl e 3 | Com par ati ve Exa mpl e 4 | Com par ati ve Exa mpl e 5 | Com par ati ve Exa mpl e 6 | Com par ati ve Exa mpl e 7 | Com par ati ve Exa mpl e 8 | Com par ati ve Exa mpl e 9 | Com par ati ve Exa mpl e 10 | Com par ati ve Exa mpl e 11 |
|---|---|---|---|---|---|---|---|---|---|---|---|---|
| Melt flow inde x | g / 1 0 m i n | 17. 2 | 14. 3 | 14. 8 | 10. 2 | 14. 4 | 14. 7 | 19. 0 | 8.0 | 12. 4 | 13. 0 | 12. 0 |
| Izod impa ct stre ngth | k J / m ² | 8.4 | 8.1 | 8.3 | 8.2 | 6.3 | 7.2 | 3.2 | 12. 7 | 10. 7 | 8.8 | 8.5 |
| Tens ile stre ngth | M P a | 140 | 143 | 142 | 147 | 149 | 148 | 143 | 135 | 140 | 128 | 146 |
| Elon gati on | % | 2.0 | 2.4 | 2.3 | 3.0 | 2.2 | 2.4 | 1.0 | 1.5 | 2.3 | 3.0 | 2.5 |
| Flex ural stre ngth | M P a | 189 | 184 | 183 | 180 | 181 | 182 | 190 | 178 | 186 | 175 | 191 |
| Flex ural modu lus | M P a | 860 0 | 785 0 | 783 0 | 781 0 | 782 0 | 770 0 | 870 0 | 720 0 | 802 0 | 710 0 | 820 0 |
| Heat defl ecti on temp erat ure | ° C | 175 | 178 | 173 | 182 | 179 | 173 | 184 | 176 | 179 | 182 | 191 |
| Dens ity | g / c m ³ | 1.4 7 | 1.4 7 | 1.4 6 | 1.4 6 | 1.4 6 | 1.4 6 | 1.4 9 | 1.4 9 | 1.4 6 | 1.4 7 | 1.4 6 |

As shown in Tables 2 and 4, Examples 1 to 3 including polybutylene terephthalate, recycled chips obtained by desalting waste fishing nets, a reinforcing resin, and glass fiber, which are the essential components of the present invention, in a predetermined composition ratio exhibit an IZOD impact strength of 7.0 kJ/m² or more, a tensile strength of 140 MPa or more, an elongation of 2.0 % or more, a flexural strength of 189 MPa or more, a flexural modulus of 8,600 MPa or more, a heat deflection temperature of 182 °C or higher, and a density of 1.46 g/cm³. Based on these results, it can be confirmed that Examples 1 to 3 exhibit excellent physical property balance between high rigidity, high load, heat resistance, and specific gravity.

On the other hand, as shown in Tables 3 and 5, in the case of Comparative Example 1 including polybutylene terephthalate in an amount less than the range of the present invention and including a recycled molded article in an amount exceeding the range of the present invention, compared to Example 1, heat deflection temperature is reduced.

In addition, as shown in Tables 3 and 5, in the case of Comparative Examples 2 and 3 including silica, alumina, and calcium oxide constituting glass fiber in amounts outside the range of the present invention, compared to Example 1, flexural modulus and heat deflection temperature are reduced.

In addition, as shown in Tables 3 and 5, in the case of Comparative Example 4 in which the intrinsic viscosity of polybutylene terephthalate is outside the range of the present invention, compared to Example 1, flexural modulus and fluidity are reduced.

In addition, as shown in Tables 3 and 5, in the case of Comparative Example 5 in which the amounts of components constituting a acrylate-styrene-acrylonitrile graft copolymer in a reinforcing resin are outside the range of the present invention, impact strength, flexural modulus, and heat deflection temperature are reduced. In the case of Comparative Example 6 in which the amounts of components constituting a styrene-acrylate copolymer in a reinforcing resin are outside the range of the present invention, compared to Example 1, flexural modulus and heat deflection temperature are poor.

In addition, as shown in Tables 3 and 5, in the case of Comparative Example 7 in which an acrylate-styrene-acrylonitrile copolymer is not included in a reinforcing resin, impact strength, elongation, and density are poor. In the case of Comparative Example 8 in which a styrene-acrylonitrile copolymer is not included in a reinforcing resin, compared to Example 1, elongation, flexural modulus, and density are poor.

In addition, as shown in Tables 3 and 5, in the case of Comparative Example 9 in which an excess of an acrylate-styrene-acrylonitrile copolymer is included in a reinforcing resin, compared to Example 1, heat deflection temperature is poor.

In addition, as shown in Tables 3 and 5, in the case of Comparative Example 10 including a recycled molded article in an amount less than the range of the present invention, compared to Example 1, mechanical properties such as tensile strength, flexural strength, and flexural modulus are poor.

In addition, as shown in Tables 3 and 5, in the case of Comparative Example 11 including a polyethylene terephthalate homopolymer instead of a recycled molded article, compared to Example 1, melt flow index, flexural modulus, and heat deflection temperature are reduced.

In conclusion, when a recycled molded article satisfying specific physical properties described in the present invention is mixed with a polyester resin, a reinforcing resin, and a filling fiber in an appropriate content ratio, compared to a thermoplastic resin composition containing a conventional polyester composite material containing fresh polyethylene terephthalate instead of a recycled molded article, high heat resistance and high rigidity may be obtained while satisfying eco-friendliness.

## Claims

1. A thermoplastic resin composition, comprising a polyester resin, a reinforcing resin, a filling fiber, and a recycled molded article,
wherein, when a weight of the polyester resin is a, a weight of the reinforcing resin is b, a weight of the filling fiber is c, and a weight of the recycled molded article is d, 37≤a≤59.2, 15≤b≤19.9, 20≤c≤34.9, and 5≤d≤14.9 are simultaneously satisfied, and
the recycled molded article is a product obtained by processing waste fishing nets.

2. The thermoplastic resin composition according to claim 1, wherein the polyester resin is polybutylene terephthalate having an intrinsic viscosity (IV) of less than 1.0 dl/g, wherein the intrinsic viscosity is measured according to ASTM D2857.

3. The thermoplastic resin composition according to claim 1, wherein the reinforcing resin comprises a styrene-acrylonitrile copolymer and an acrylate-styrene-acrylonitrile graft copolymer in a weight ratio of 1:0.5 to 5.

4. The thermoplastic resin composition according to claim 3, wherein the styrene-acrylonitrile copolymer comprises 66 to 76 % by weight of an aromatic vinyl compound and 26 to 34 % by weight of a vinyl cyanide compound.

5. The thermoplastic resin composition according to claim 3, wherein the acrylate-styrene-acrylonitrile graft copolymer comprises 40 to 47 % by weight of acrylic rubber, 30 to 37 % by weight of an aromatic vinyl compound, and 23 to 28 % by weight of a vinyl cyanide compound.

6. The thermoplastic resin composition according to claim 1, wherein the filling fiber is glass fiber comprising 45 to 55 % by weight of silica, 15 to 32 % by weight of alumina, and 15 to 32 % by weight of calcium oxide.

7. The thermoplastic resin composition according to claim 1, wherein the product obtained by processing waste fishing nets is a product obtained by desalting and chip-molding waste fishing net pellets containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment.

8. The thermoplastic resin composition according to claim 1, wherein the thermoplastic resin composition comprises one or more additives selected from an antioxidant, a lubricant, a hydrolysis suppressor, a flame retardant, a nucleating agent, a heat stabilizer, a light stabilizer, and a thickener.

9. The thermoplastic resin composition according to claim 1, wherein the thermoplastic resin composition has a flexural modulus of 8,000 MPa or more as measured at a rate of 2 mm/min and a span of 64 according to standard measurement ISO 178.

10. The thermoplastic resin composition according to claim 1, wherein the thermoplastic resin composition has a roomtemperature impact strength of 7.0 kJ/m² or more as measured according to standard measurement ISO 180/1A.

11. The thermoplastic resin composition according to claim 1, wherein the thermoplastic resin composition has a heat deflection temperature of 180 °C or higher as measured under 1.80 MPa according to standard measurement ISO 75.

12. A method of preparing a thermoplastic resin composition, comprising:
desalting waste polyester fishing nets having an intrinsic viscosity (IV) of 0.6 to 0.9 dl/g to obtain waste fishing net pellets and chip-molding the waste fishing net pellets to manufacture a recycled molded article containing 60 to 99.9 % by weight in total of Ca, Fe, and S and 0.1 to 40 % by weight in total of Na, Mg, Al, Si, K, Ti, Ni, Zn, Sb, and Cl based on 100 % by weight in total of inorganic components as measured using ICP-OES equipment; and
melt-kneading and extruding the recycled molded article, a polyester resin having an intrinsic viscosity (IV) of less than 1.0 dl/g, a reinforcing resin, and a filling fiber,
wherein, when a weight of the polyester resin is a, a weight of the reinforcing resin is b, a weight of the filling fiber is c, and a weight of the recycled molded article is d, 37≤a≤59.2, 15≤b≤19.9, 20≤c≤34.9, and 5≤d≤14.9 are simultaneously satisfied.

13. A molded article, manufactured using the thermoplastic resin composition according to any one of claims 1 to 11.

14. The molded article according to claim 13, wherein the molded article is an automotive part.

## Patentansprüche

1. Thermoplastische Harzzusammensetzung, umfassend ein Polyesterharz, ein Verstärkungsharz, eine Füllfaser und einen recycelten Formgegenstand,
wobei, wenn ein Gewicht des Polyesterharzes a ist, ein Gewicht des Verstärkungsharzes b ist, ein Gewicht der Füllfaser c ist und ein Gewicht des recycelten Formgegenstands d ist, 37≤a≤59,2, 15≤b≤19,9, 20≤c≤34,9 und 5≤d≤14,9 gleichzeitig erfüllt sind, und
der recycelte Formgegenstand ein Produkt ist, das durch Verarbeiten von Abfallfischnetzen erhalten wird.

2. Thermoplastische Harzzusammensetzung nach Anspruch 1, wobei das Polyesterharz Polybutylenterephthalat mit einer intrinsischen Viskosität (IV) von weniger als 1,0 dl/g ist, wobei die intrinsische Viskosität gemäß ASTM D2857 gemessen wird.

3. Thermoplastische Harzzusammensetzung nach Anspruch 1, wobei das Verstärkungsharz ein Styrol-Acrylnitril-Copolymer und ein Acrylat-Styrol-Acrylnitril-Pfropfcopolymer in einem Gewichtsverhältnis von 1:0,5 bis 5 umfasst.

4. Thermoplastische Harzzusammensetzung nach Anspruch 3, wobei das Styrol-Acrylnitril-Copolymer 66 bis 76 Gew.-% einer aromatischen Vinylverbindung und 26 bis 34 Gew.-% einer Vinylcyanidverbindung umfasst.

5. Thermoplastische Harzzusammensetzung nach Anspruch 3, wobei das Acrylat-Styrol-Acrylnitril-Pfropfcopolymer 40 bis 47 Gew.-% Acrylkautschuk, 30 bis 37 Gew.-% einer aromatischen Vinylverbindung und 23 bis 28 Gew.-% einer Vinylcyanidverbindung umfasst.

6. Thermoplastische Harzzusammensetzung nach Anspruch 1, wobei die Füllfaser Glasfaser ist, die 45 bis 55 Gew.-% Siliciumdioxid, 15 bis 32 Gew.-% Aluminiumoxid und 15 bis 32 Gew.-% Calciumoxid umfasst.

7. Thermoplastische Harzzusammensetzung nach Anspruch 1, wobei das Produkt, das durch Verarbeiten von Abfallfischnetzen erhalten wird, ein Produkt ist, das durch Entsalzen und Chipformen von Abfallfischnetzpellets erhalten wird, die insgesamt 60 bis 99,9 Gew.-% Ca, Fe und S und insgesamt 0,1 bis 40 Gew.-% Na, Mg, Al, Si, K, Ti, Ni, Zn, Sb und Cl, bezogen auf insgesamt 100 Gew.-% anorganische Komponenten, wie unter Verwendung von ICP-OES-Ausrüstung gemessen, enthalten.

8. Thermoplastische Harzzusammensetzung nach Anspruch 1, wobei die thermoplastische Harzzusammensetzung ein oder mehrere Additive umfasst, die aus einem Antioxidationsmittel, einem Schmiermittel, einem Hydrolyseunterdrücker, einem Flammschutzmittel, einem Nukleierungsmittel, einem Wärmestabilisator, einem Lichtstabilisator und einem Verdickungsmittel ausgewählt sind.

9. Thermoplastische Harzzusammensetzung nach Anspruch 1, wobei die thermoplastische Harzzusammensetzung einen Biegemodul von 8.000 MPa oder mehr, wie bei einer Rate von 2 mm/min und einer Spanne von 64 gemäß der Standardmessung ISO 178 gemessen, aufweist.

10. Thermoplastische Harzzusammensetzung nach Anspruch 1, wobei die thermoplastische Harzzusammensetzung eine Raumtemperaturschlagzähigkeit von 7,0 kJ/m² oder mehr, wie gemäß der Standardmessung ISO 180/1A gemessen, aufweist.

11. Thermoplastische Harzzusammensetzung nach Anspruch 1, wobei die thermoplastische Harzzusammensetzung eine Wärmeformbeständigkeitstemperatur von 180 °C oder höher, wie unter 1,80 MPa gemäß der Standardmessung ISO 75 gemessen, aufweist.

12. Verfahren zur Herstellung einer thermoplastischen Harzzusammensetzung, umfassend:
Entsalzen von Abfallpolyesterfischnetzen mit einer intrinsischen Viskosität (IV) von 0,6 bis 0,9 dl/g, um Abfallfischnetzpellets zu erhalten, und Chipformen der Abfallfischnetzpellets, um einen recycelten Formgegenstand herzustellen, der insgesamt 60 bis 99,9 Gew.-% Ca, Fe und S und insgesamt 0,1 bis 40 Gew.-% Na, Mg, Al, Si, K, Ti, Ni, Zn, Sb und Cl, bezogen auf insgesamt 100 Gew.-% anorganische Komponenten, wie unter Verwendung von ICP-OES-Ausrüstung gemessen, enthält; und
Schmelzkneten und Extrudieren des recycelten Formgegenstands, eines Polyesterharzes mit einer intrinsischen Viskosität (IV) von weniger als 1,0 dl/g, eines Verstärkungsharzes und einer Füllfaser,
wobei, wenn ein Gewicht des Polyesterharzes a ist, ein Gewicht des Verstärkungsharzes b ist, ein Gewicht der Füllfaser c ist und ein Gewicht des recycelten Formgegenstands d ist, 37 ≤ a ≤ 59,2, 15 ≤ b ≤ 19,9, 20 ≤ c ≤ 34,9 und 5 ≤ d ≤ 14,9 gleichzeitig erfüllt sind.

13. Formgegenstand, hergestellt unter Verwendung der thermoplastischen Harzzusammensetzung nach einem der Ansprüche 1 bis 11.

14. Formgegenstand nach Anspruch 13, wobei der Formgegenstand ein Automobilteil ist.

## Revendications

1. Composition de résine thermoplastique, comprenant une résine polyester, une résine de renforcement, une fibre de remplissage et un article moulé recyclé,
dans laquelle, quand un poids de la résine polyester est a, un poids de la résine de renforcement est b, un poids de la fibre de remplissage est c et un poids de l'article moulé recyclé est d, 37≤a≤59,2, 15≤b≤19,9, 20≤c≤34,9 et 5≤d≤14,9 sont satisfaits simultanément, et
l'article moulé recyclé est un produit obtenu par le traitement de filets de pêche abandonnés.

2. Composition de résine thermoplastique selon la revendication 1, dans laquelle la résine polyester est un téréphtalate de polybutylène ayant une viscosité intrinsèque (IV) égale ou inférieure à 1,0 dl/g, dans laquelle la viscosité intrinsèque est mesurée selon ASTM D2857.

3. Composition de résine thermoplastique selon la revendication 1, dans laquelle la résine de renforcement comprend un copolymère de styrène-acrylonitrile et un copolymère greffé d'acrylate-styrène-acrylonitrile dans un rapport en poids de 1:0,5 à 5.

4. Composition de résine thermoplastique selon la revendication 3, dans laquelle le copolymère de styrène-acrylonitrile comprend 66 à 76 % en poids d'un composé de vinyle aromatique et 26 à 34 % en poids d'un composé de cyanure de vinyle.

5. Composition de résine thermoplastique selon la revendication 3, dans laquelle le copolymère greffé d'acrylate-styrène-acrylonitrile comprend 40 à 47 % en poids de caoutchouc acrylique, 30 à 37 % en poids d'un composé de vinyle aromatique et 23 à 28 % en poids d'un composé de cyanure de vinyle.

6. Composition de résine thermoplastique selon la revendication 1, dans laquelle la fibre de remplissage est une fibre de verre comprenant 45 à 55 % en poids de silice, 15 à 32 % en poids de alumine et 15 à 32 % en poids d'oxyde de calcium.

7. Composition de résine thermoplastique selon la revendication 1, dans laquelle le produit obtenu par le traitement de filets de pêche abandonnés est un produit obtenu par le dessalement et le moulage en copeaux de granulés de filets de pêche abandonnés contenant 60 à 99,9 % en poids au total de Ca, Fe et S et 0,1 à 40 % en poids au total de Na, Mg, AI, Si, K, Ti, Ni, Zn, Sb et CI sur la base de 100 % en poids au total de composants inorganiques mesurés en utilisant un appareil ICP-OES.

8. Composition de résine thermoplastique selon la revendication 1, dans laquelle la composition de résine thermoplastique comprend un ou plusieurs additifs sélectionnés parmi un antioxydant, un lubrifiant, un suppresseur d'hydrolyse, un retardateur de flamme, un agent de nucléation, un stabilisateur thermique, un stabilisateur de lumière et un épaississeur.

9. Composition de résine thermoplastique selon la revendication 1, dans laquelle la composition de résine thermoplastique a un module de flexion égal ou supérieur à 8000 MPa, mesuré à raison de 2 mm/mn et une distance entre les appuis de 64 selon la mesure standard ISO 178.

10. Composition de résine thermoplastique selon la revendication 1, dans laquelle la composition de résine thermoplastique a une résistance aux chocs à température ambiante égale ou supérieure à 7,0 kJ/m², mesurée selon la mesure standard ISO 180/1A.

11. Composition de résine thermoplastique selon la revendication 1, dans laquelle la composition de résine thermoplastique a une température de déformation à la chaleur égale ou supérieure à 180°C, mesurée à 1,80 MPa selon la mesure standard ISO 75.

12. Procédé de préparation d'une composition de résine thermoplastique, consistant à :
dessaler des filets de pêche en polyester abandonnés ayant une viscosité intrinsèque (IV) de 0,6 à 0,9 dl/g pour obtenir des granulés de filets de pêche abandonnés et mouler en copeaux des granulés de filets de pêche abandonnés pour fabriquer un article moulé recyclé contenant 60 à 99,9 % en poids au total de Ca, Fe et S et 0,1 à 40 % en poids au total de Na, Mg, AI, Si, K, Ti, Ni, Zn, Sb et CI sur la base de 100 % en poids au total de composants inorganiques mesurés en utilisant un appareil ICP-OES; et
malaxer à l'état fondu et extruder l'article moulé recyclé, une résine polyester ayant une viscosité intrinsèque (IV) égale ou inférieure à 1,0 dl/g, une résine de renforcement et une fibre de remplissage,
dans lequel, quand un poids de la résine polyester est a, un poids de la résine de renforcement est b, un poids de la fibre de remplissage est c et un poids de l'article moulé recyclé est d, 37≤a≤59,2, 15≤b≤19,9, 20≤c≤34,9 et 5≤d≤14,9 sont satisfaits simultanément.

13. Article moulé, fabriqué en utilisant la composition de résine thermoplastique selon l'une quelconque des revendications 1 à 11.

14. Article moulé selon la revendication 13, dans lequel l'article moulé est une pièce automobile.
